Europäisches Patentamt

European Patent Office

Office européen des brevets

(19)

(11) Publication number: **0 106 544**
**B1**

(12) # EUROPEAN PATENT SPECIFICATION

(45) Date of publication of patent specification: **18.12.85**

(51) Int. Cl.⁴: **F 28 F 27/02, B 01 D 3/00**

(21) Application number: **83305454.7**

(22) Date of filing: **16.09.83**

(54) **Distributor apparatus for fluid including a gaseous and liquid phase.**

(30) Priority: **16.09.82 JP 161983/82**

(43) Date of publication of application:
**25.04.84 Bulletin 84/17**

(45) Publication of the grant of the patent:
**18.12.85 Bulletin 85/51**

(84) Designated Contracting States:
**BE DE FR GB**

(56) References cited:
**FR-A-2 404 190**
**GB-A- 413 947**
**GB-A-1 163 288**
**US-A-3 079 092**
**US-A-3 419 251**
**US-A-4 299 786**

(73) Proprietor: **KABUSHIKI KAISHA KOBE
SEIKO SHO**
**3-18 1-chome, Wakinohama-cho Chuo-ku**
**Kobe 651 (JP)**

(72) Inventor: **Yamada, Kaneo**
**1-13-10, Sawano**
**Akashi Hyogo-ken (JP)**
Inventor: **Okamoto, Shigemi**
**6-7-11, Takaoka Okubo-cho**
**Akashi Hyogo-ken (JP)**
Inventor: **Asada, Kazuhiko**
**376, Dainichi-cho Nozato**
**Himeji Hyogo-ken (JP)**

(74) Representative: **Wright, Hugh Ronald et al
Brookes & Martin 52/54 High Holborn
London WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a distributor apparatus for uniformly distributing a fluid including both gaseous and liquid phases, and more particularly to an apparatus for uniformly distributing such a fluid to the fluid inlets of a core of a heat exchanger.

In heat exhangers of the type employed in various chemical plants, or in cryogenic separating or liquefying apparatus, in order to distribute a fluid including gaseous and liquid phases to a core of the heat exchanger uniformly in the widthwise direction of the core, it has been proposed that the liquid and gaseous phases of the fluid are separated, outside the heat exchanger, which separate phases are then separately introduced into a distributing apparatus integrally formed on the top of the heat exchanger so that the fluid may be distributed uniformly to fluid inlets of the core by means of the distributor. One of such distributors is enclosed in the specification of, for example, US Patent No. 3,282,334, and this distributor has a structure as shown in Fig. 1. Thus, this apparatus includes a header 2 forming a header chamber disposed on the top of a core 1 of a heat exchanger and extending along the length of the core 1, and a spreading pipe 3 extending along the length of the core 1 and having a plurality of spaced rows of holes 4 formed radially therein (ie each row of holes 4 extends radially about the centre line of the pipe 3) to spread the fluid across the top of the core. Thus the liquid phase can be distributed to inlets 5 of downward flow passages 8 from the holes 4 of the spreading pipe 3 independently of the rate of distribution of the gas phase to the inlets 5 from a feed gas nozzle 6 via the header chamber 2. However, although the holes 4 in each row are differentially spaced from each other, that is, in the disclosed apparatus the distance between adjacent holes 4 near an end of each row is smaller than the distance between adjacent holes 4 near the centre of each row in order to attain uniform distribution of liquid in the widthwise direction of the core 1, a greater amount of liquid will still be distributed at the centre than at opposite ends of each row. Accordingly, the apparatus is disadvantageous in that liquid is not distributed uniformly over the entire width of the core 1 and fluctuation of the amount of liquid will cause fluctuation of the distribution of the liquid.

The present invention provides an apparatus for uniformly distributing a fluid including a gaseous and a liquid phase, said apparatus comprising a header which is disposed on the top of a core, said core having fluid inlets formed therein in a predetermined spaced relationship relative to each other and the header forming a chamber above said fluid inlets and a liquid spreading device disposed within and extending along the length of said header chamber, said liquid spreading device comprising a main pipe extending along the full length of said header chamber, characterised in that there are provided a plurality of upstanding feed gas nozzles connected to said header for feeding gas in a predetermined direction into said header chamber, a plurality of branch pipes connected to said main pipe and extending perpendicularly with reference to the axis of said main pipe, said branch pipes extending just above and along the full width of said fluid inlets of said core, the lower part of each of said branch pipes having a plurality of liquid spreading holes in a predetermined spaced relationship along the full length thereof arranged so as to distribute the fluid in the same direction as the gas, a plurality of liquid feed pipes being secured to said main pipe and uprightly extending therefrom for feeding liquid to said core in said predetermined direction; and a short pipe connecting the centre of each of said branch pipes to said main pipe.

Brief description of the drawings:

Figure 1, already referred to, is a cross sectional view of a portion of a conventional apparatus for uniformly distributing a gaseous and liquid phase fluid;

Figure 2 is a side elevational view of an aluminum brazed plate fin type heat exchanger to which the present invention is applied;

Figure 3 is a cross sectional view of an apparatus for uniformly distributing a gaseous and liquid phase fluid in the heat exchanger of Figure 2;

Figure 4 is a sectional view taken along line IV—IV of Figure 3; and

Figure 5 is a diagrammatic representation showing distribution of liquid by an apparatus for uniformly distributing a fluid including a gaseous and liquid phase according to the present invention.

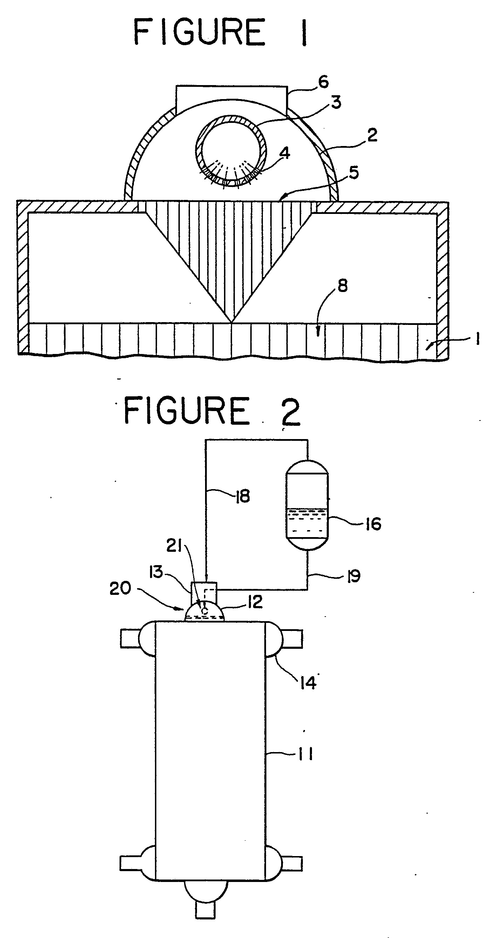

Referring first to Figure 2, there is illustrated an example of an aluminum brazed plate fin type heat exchanger to which an apparatus of the present invention is applied. The heat exchanger includes a core 11, a header 12 for feeding a fluid having gaseous and liquid phases to the inlets of the downward flow ·passages of the core 11, a feed gas nozzle 13 for feeding the gas phase of the fluid to the header 12, another header 14 for feeding the gas phase of the fluid to the header 12, and a gas/liquid separator 16 for separating the gaseous and liquid phases of the fluid fed thereto by way of a line 18. From the gas liquid separator 16, the gas phase is fed to a uniform distributor apparatus 20 by way of a line 18 and nozzle 13 while the liquid phase is fed to the apparatus 20 by way of another line 19. Though not shown, a pump may be provided for the line 19 for pumping the liquid to the uniform distributor apparatus 20.

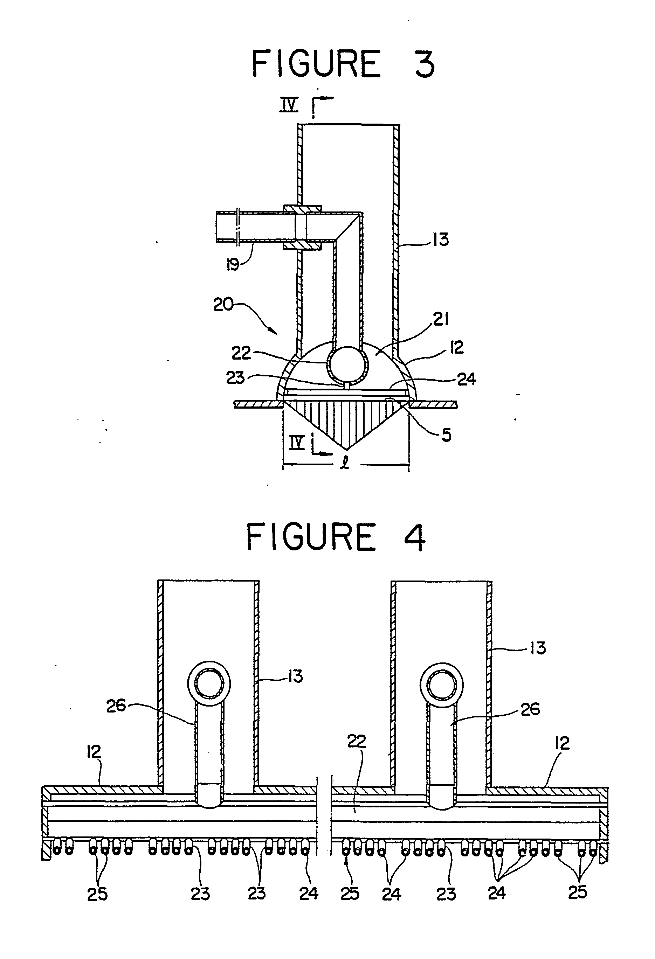

Referring now to Figures 3 and 4, the apparatus 20 for uniformly distributing a fluid including a gaseous and a liquid phase according to the present invention includes the header 12 which forms a chamber above the inlets of the downward flow passages which inlets are provided in a predetermined spaced relationship on the top of the core 11. The apparatus further includes a pair of feed gas nozzles 13 which extend upwardly from the top of the header 12, and a liquid spreading device 21 extending within and along the length of the header 12. The liquid spreading device 21 includes a main pipe 22 extending along the full length of the header 12, a plurality of short pipes 23 secured to and located directly below the main pipe 22 in a predetermined spaced relationship relative to each other, and a plurality of branch pipes 24 each secured to the bottom end of a respective one of the short pipes 23 and extending perpendicularly to the main pipe 22 across the full width of the downward flow inlets 5 of the core 11. Each of the branch pipes 24 has a plurality of liquid spreading holes 25 passing through the bottom wall of the respective branch pipe 24, the set of holes being provided along the full length of each branch pipe 24 in a predetermined spaced relationship relative to each other. The main pipe 22 has a pair of feed liquid pipes 26 extending upwardly therefrom so that liquid may be fed by way of the feed liquid pipes 26 and the line 19.

Where the uniform distributor apparatus having such a construction as described above is used, gas fed by way of the line 18 passes through the feed gas nozzle 13 and the chamber formed by the header 12 and is then dispersed to the inlets 5 of the downward flow passages of the core 11 similarly to the conventional manner, while liquid fed from the line 19 to the main pipe 22 of the liquid spreading device 21 is uniformly distributed to the individual inlets 5 of the downward flow passages from the branch pipes 24 located above the entrances 5.

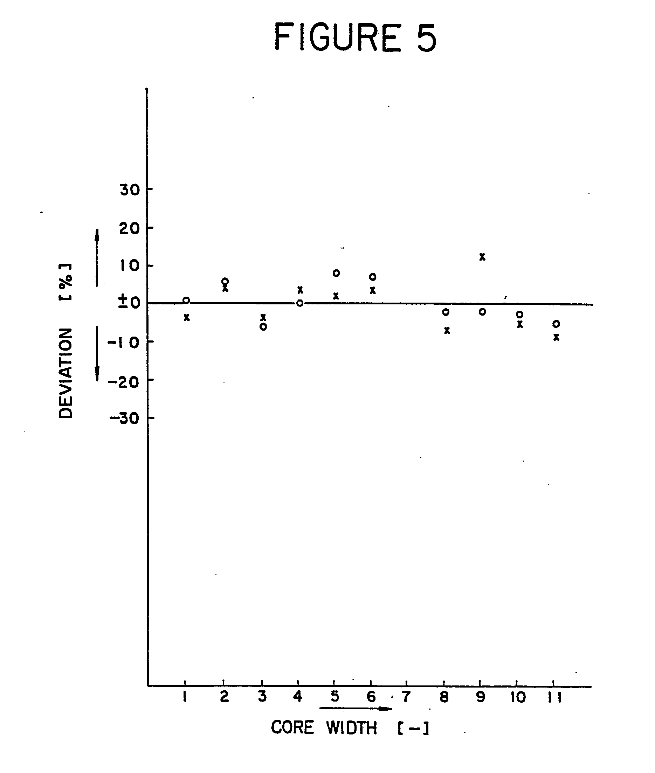

In a test, a score was divided into up to eleven sections in the widthwise direction thereof and pure water was pumped to its main pipe in order to find deviations from an average of the amount of water flowing into the individual sections of the core. The results are diagrammatically shown in Figure 5. In Figure 5, marks O and X represent the results when the rate of water fed to the main pipe 22 is 0.57m/sec and 0.38m/sec respectively.

As is apparent from the results in Figure 5, the uniform distributor apparatus for uniformly distributing a fluid including a gaseous and a liquid phase according to the present invention can distribute liquid substantially uniformly with a deviation of less than plus or minus 10 percent. Besides, even if the flow rate fluctuates, the apparatus can follow such fluctuations and still distribute liquid uniformly.

## Claims

1. An apparatus for uniformly distributing a fluid including a gaseous and a liquid phase, said apparatus comprising a header (12) which is disposed on the top of a core (11), said core (11) having fluid inlets (5) formed therein in a predetermined spaced relationship relative to each other and the header (12) forming a chamber above said fluid inlets (5) and a liquid spreading device disposed within and extending along the length of said header chamber, said liquid spreading device comprising a main pipe (22) extending along the full length of said header chamber, characterised in that there are provided a plurality of upstanding feed gas nozzles (13) connected to said header (12) for feeding gas in a predetermined direction into said header chamber, a plurality of branch pipes (24) connected to said main pipe (22) and extending perpendicularly with reference to the axis of said main pipe (22), said branch pipes (24) extending just above and along the full width of said fluid inlets (5) of core (11), the lower part of each of said branch pipes (24) having a plurality of liquid spreading holes (25) in a predetermined spaced relationship along the full length thereof arranged so as to distribute the fluid in the same direction as the gas, a plurality of liquid feed pipes (26) being secured to said main pipe (22) and uprightly extending therefrom for feeding liquid to said core (11) in said predetermined direction; and a short pipe (23) connecting the centre of each of said branch pipes (24) to said main pipe (22).

2. An apparatus according to claim 1, characterised in that the number of said branch pipes (24) is determined in accordance with the number of said fluid inlets (5) of said core (11).

## Patentansprüche

1. Vorrichtung zum gleichmäßigen Verteilen eines Fluids, das sich in seiner gasförmigen und flüssigen Phase befindet, wobei die Vorrichtung einen Verteiler (12) aufweist ist, der an der Spitze eines Kerns (11) angeordnet ist, wobei der Kern (11) Fluid-Eintrittsöffnungen (5) aufweist, die darin in einer vorbestimmten versetzten Anordnung relativ zueinander angeordnet sind, und der Verteiler (12) bildet über den Fluid-Eintrittsöffnungen (5) eine Kammer und eine Flüssigkeitsstreueinrichtung ist innerhalb und sich entlang der Länge der Verteiler-Kammer erstreckend angeordnet, wobei die Flüssigkeitsstreueinrichtung ein Hauptrohr (22) aufweist, das sich entlang der gesamten Länge der Verteiler-Kammer erstreckt, dadurch gekennzeichnet, daß eine Vielzahl von aufrechten Speisegasdüsen (13) vorgesehen ist, die zur Zuführung von Gas in einer vorbestimmten Richtung in die Verteiler-Kammer mit dem Verteiler (12) verbunden sind, eine Vielzahl von Zweigrohren (24) mit dem Hauptrohr (22) verbunden ist, die sich bezüglich der Achse des Hauptrohrs (22) senkrecht erstrecken, wobei sich zie Zweigrohre (24) über und entlang der gesamten Breite der Fluid-Eintrittsöffnungen (5) des Kerns (11) erstrecken, der untere Teil jedes Zweigrohres (24) eine Vielzahl von Flüssigkeitsstreubohrungen (25) hat, die in einer vorbestimmten versetzten Beziehung entlang deren gesamten Breite derart angeordnet sind, so daß sie die Flüssigkeit in dieselbe Richtung verteilen wie das Gas, wobei eine Vielzahl von Flüssigkeitszuführröhren (26) an dem Hauptrohr befestigt ist, wobei sich diese zur Zuführung von Flüssigkeit in den Kern (11) in der vorbestimmten Richtung senkrecht davon erstrecken, und ein Kurzrohr (23) verbindet die Mitte jedes Zweigrohrs (25) mit dem Hauptrohr (22).

2. Vorrichtung nach Anspruch 1, dadurch gekennzeichnet, daß die Anzahl der Zweigrohre (24) gemäß der Anzahl der Fluid-Eintrittsöffnungen (5) des Kerns (11) festgelegt ist.

**Revendications**

1. Dispositif pour la distribution uniforme d'un fluide comportant des phases gazeuse et liquide, ce dispositif comprenant un collecteur (12) qui est disposé sur le sommet d'un coeur (11), ce coeur (11) présentant des entrées de fluide (5) qui y sont ménagées dans une relation prédéterminée d'espacement les unes par rapport aux autres et le collecteur (12) formant une chambre au-dessus desdites entrées de fluide (5) et un dispositif répartiteur de liquide disposé dans ladite chambre de collecteur et s'étendant suivant sa longueur, ledit dispositif répartiteur de liquide comprenant un tuyau principal (22) qui s'étend sur toute la longueur de ladite chambre de collecteur, caractérisé en ce qu'il est prévu une série d'ajutages (13) d'amenée de gaz dressés vers le haut, reliés audit collecteur (12) pour amener du gaz dans une direction déterminée dans ladite chambre de collecteur, une série de tuyaux d'embranchement (24) reliés audit tuyau principal (22) et s'étendant perpendiculairement à l'axe du tuyau principal (22), ces tuyaux d'embranchement (24) s'étendant juste au-dessus et sur toute la largeur desdites entrées de fluide (5) dudit coeur (11), la partie inférieure de chacun desdits tuyaux d'embranchement (24) présentant une série de trous de répartition de liquide (25) ayant une relation d'espacement prédéterminée sur toute sa longueur et agencés pour distribuer le fluide dans la même direction que le gaz, une série de tuyaux d'amenée de liquide (26) étant fixée audit tuyau principal (22) et s'étendent vers le haut à partir de ce dernier pour amener du liquide audit coeur (11) dans ladite direction prédéterminée; et un court tuyau (23) reliant le milieu de chacun desdits tuyaux d'embranchement (24) au tuyau principal (22).

2. Dispositif selon la revendication 1, caractérisé en ce que le nombre desdits tuyaux d'embranchement (24) est déterminé d'après le nombre desdites entrées de fluide (5) dudit coeur (11).

# FIGURE 1

# FIGURE 2

# FIGURE 3

# FIGURE 4

# FIGURE 5